# EUROPÄISCHE PATENTSCHRIFT

(11) **EP 1 187 796 B1**
(45) Veröffentlichungstag und Bekanntmachung des Hinweises auf die Patenterteilung: **18.11.2009**
(21) Anmeldenummer: 00941964.9
(22) Anmeldetag: 19.05.2000
(51) Int. Cl.: C04B 41/48

(54) **STOFFGEMISCH ZUR KONSERVIERUNG VON GESTEINEN SOWIE KALK- BZW. ZEMENTHALTIGEN PUTZEN SOWIE ZEMENTGEBUNDENEN STEINEN**
SUBSTANCE MIXTURE FOR PRESERVING ROCKS AND PLASTERS CONTAINING LIME OR CEMENT, AS WELL AS CEMENT-BONDED STONES
MELANGE DE MATIERES POUR LA CONSERVATION DE ROCHES, DE CREPIS CONTENANT DE LA CHAUX OU DU CIMENT ET DE PIERRES LIEES PAR DU CIMENT

(30) Priorität: 22.05.1999 DE 19923718
(43) Veröffentlichungstag der Anmeldung: 20.03.2002
(73) Patentinhaber: Petry, Michael, 52070 Aachen (DE)
(72) Erfinder: Petry, Michael, 52070 Aachen (DE)
(74) Vertreter: König, Gregor Sebastian
(86) Internationale Anmeldenummer: PCT/EP2000/004544
(87) Internationale Veröffentlichungsnummer: WO 2000/071485

(56) Entgegenhaltungen:
- CH-A- 433 722
- E-B EMULSA BOND MAKES PAINT ACRYLIC STICK TO CHALKY, DUSTY SURFACES, [Online] XP002147451 Gefunden im Internet: <URL:http://www.floodaustralia.net/emulsab ond.html> [gefunden am 2000-09-14]
- SOLID COLOR STAIN, [Online] XP002147452 Gefunden im Internet: <URL:http://floodco.com/solidcolorstain.cf m> [gefunden am 2000-09-14]
- HAS LATEX WON THE PAINT WARS?, [Online] XP002147453 Gefunden im Internet: <URL:http://www.taunton.com/fh/features/ma terials/paint/4.htm> [gefunden am 2000-09-14]
- AN OUTLINE FOR WHOLE HOUSE PAINT REMOVAL AND RECOATING, [Online] XP002147454 Gefunden im Internet: <URL:http://members.aol.com/jestroj/pbook. htm> [gefunden am 2000-09-14]
- PONDEROSA PAINT, [Online] XP002147455 Gefunden im Internet: <URL:http://ponderosapaint.com/ranchhand.h tm> [gefunden am 2000-09-14]

## Beschreibung

Die Anmeldung nimmt die Priorität der deutschen Patentanmeldung 199 23 718.2 in Anspruch, die durch Bezugnahme in die vorliegend Anmeldung aufgenommen wird.

Die Erfindung betrifft die Verwendung einer Mischung zur Festigung von Steinen, insbe-, sondere von Gesteinen sowie kalk- bzw. zementhaltigen Putzen sowie zementgebundenen Steinen.

Steine, ob sie in der Natur vorkommen oder in Gebäuden und Denkmälern verwendet werden, sind der Verwitterung bzw. dem Zerfall ausgesetzt. Dieser Zerfall hat unterschiedliche Ursachen. Man unterscheidet zum einen die mechanische oder physikalische Verwitterung, die u.a. durch wechselnde Temperaturen hervorgerufen wird, weshalb aufgrund unterschiedlicher Wärmeausdehnungskoeffizienten der Mineralien in den Steinen Spannungen erzeugt werden, die zur Zerstörung (Sprengung) des Steins führen. Ähnliche Folgen hat das Eindringen von Wasser und anschließendes Gefrieren des Wasser innerhalb des Stein, wobei das gefrorene Wasser ein größeres Volumen einnimmt und den Stein sprengt. Der Wind trägt langfristig ebenfalls zur mechanischen Verwitterung bei. Neben der mechanischen Verwitterung ist der Stein einer chemischen Verwitterung - bei der die Mineralien selbst angegriffen und aufgelöst werden - und einer biologischen Verwitterung, die durch Bohrmuscheln und -würmer, sowie Flechten, Bakterien, Algen und andere Pflanzen bewirkt wird, ausgesetzt. All diese Verwitterungsarten haben die Zerstörung des Steins, insbesondere der Steinoberfläche zur Folge, was zum Rieseln bzw. Absanden des Steins führt. Insbesondere Mergel - ein Sedimentgestein der Mischungsreihe Ton-Kalk- und Sandstein gehören zu den Steinen, die besonders stark von der Verwitterung betroffen sind und deren Konservierung besonders große Schwierigkeiten bereitet.

Im Rahmen von Erhaltungsmaßnahmen von Gebäuden und Steindenkmälern versucht man seit Jahrhunderten den Zerfall von Steinen durch Konservierung und Festigung des Gesteins mit unterschiedlichsten Maßnahmen (Einsatz von Wachsen und Ölen, Binderfarbe, Kunstharzen und -lösungen, dichtendem Zementmörtel etc. (vgl. Rolf Wihr "Restaurierung von Steindenkmälern", Callwag Verlag München)) aufzuhalten, um die Steine zu konservieren.

Bei einem Großteil der bekannten Maßnahmen handelt es sich dabei um Oberflächenbeschichtungen, wie Farbanstriche, die jedoch die Festigung des Steins im engeren Sinne nicht betreffen. Entsprechend steht bei diesen Maßnahmen häufig die Frage einer möglichst verbesserten Haftung der Farbe oder Lacke auf der zu bearbeitenden Oberfläche (meist Holz) im Vordergrund. Diese Produkte weisen häufig eine Acrylatbasis sowie auch eine Ölkomponente auf. Neben der reinen Oberflächenbehandlung mit verbesserter Haftvermittlung steht zudem häufig die Ausbesserung von Rissen oder Sprüngen im Gestein im Mittelpunkt des Interesses (z.B. schweizerische Patentschrift 433 722). Eine Festigung des Gesteins selber ist damit allerdings nicht verbunden.

Viele dieser Maßnahmen bewirken außerdem jedoch genau das Gegenteil von dem Bezweckten, nämlich eine stärkere Verwitterung.

Beispielsweise führt die Konservierung mit Ölen und Wachsen dazu, daß auf der Oberfläche des Steins eine wasserabweisende Schicht entsteht. Diese hindert ein ungehindertes Austreten des im Stein enthaltenen Wassers und führt dazu, daß das Wasser sich beispielsweise bei Frost oder Hitze ausdehnt, was zum Absprengen der behandelten Schicht führt. Zudem zeigen die behandelten Steine aufgrund der Materialspannung der Wachse und Öle häufig nach einiger Zeit Haarrisse.

Weiterhin ist es bekannt, zum Zweck der Konservierung lösungsmittelhaltige Hydrophobierungen, z.B. Siloxane, sowie wasserverdünnbare Reinacrylate, Silikonharzverbindungen und lösungsmittelfreie Silikate aufzutragen. Es hat sich jedoch gezeigt, daß mit diesen Substanzen der erwünschte Effekt, nämlich die Festigung des Gesteins ebenfalls nur unbefriedigend erreicht wird, da die Substanzen nicht tief genug in das Gestein eindringen und nicht fest genug auf der Steinoberfläche haften, was mit deren Oberflächenspannung zu erklären ist, die zu einer Behinderung des Diffusionsverhaltens der Substanzen in das Gestein führt. Zudem kann die im Stein enthaltene Feuchtigkeit nach dem Auftragen von Silikonharzen und lösungsmittelhaltigen Hydrophobierungen, wie bei den Wachsen und Ölen nur noch bedingt oder gar nicht entweichen, was die oben geschilderten Folgen mit sich bringt. Die behandelten Oberflächen werden daher teilweise abgestoßen. Es tritt also eine Vergrößerung der Schadensbilder anstelle einer Konservierung des Steins ein. Das ist insbesondere im Bereich des stark absandenden Mergelsteins zu beobachten.

Die lösungsmittelhaltigen Hydrophobierungen bringen den weiteren Nachteil mit sich, daß sie gesundheits- und umweltschädliche aromatische Lösungsmittel enthalten, die nach und während des Auftragens entweichen und eine nicht unerhebliche Gefahr für die mit der Konservierung befaßten Personen sowie für die Umwelt darstellen.

Zusammenfassend kann festgehalten werden, daß die bekannten Substanzen zur Festigung von Stein häufig zu einer Intensivierung der Folgen der Verwitterung und nicht zu einem Aufhalten dieses Prozesses führen. Eine zufriedenstellende Lehre zur Festigung von Gesteinen steht daher bisher nicht zur Verfügung.

Vor diesem Hintergrund liegt der Erfindung das Problem zugrunde, ein Stoffgemisch vorzuschlagen, das verwitternde Steine, insbesondere Natursteine, wie Sandstein und Mergel, wirkungsvoll festigt.

Zur Lösung dieses Problems wird vorgeschlagen, eine Stoffkombination mit einer Acrylat-Dispersion und trocknenden und nicht-trocknenden Ölen zu verwenden, die vorzugsweise als Mischung in einer Emulsion vorliegen.

Besonders vorteilhaft hat sich als Wasserkomponente der Emulsion die Verwendung von sogenannten wasserverdünnbaren Pur-Acrylat-Dispersionen herausgestellt. Als vorteilhaft hat sich das Produkt "Setta Aqua-Siegel" Parkettlack (matt, seidenmatt oder glänzend) der Firma Adler Werk Lackfabrik erwiesen. Es können der Emulsion jedoch auch andere Acrylat-Dispersionen, wie beispielsweise Rein-Acrylat-Dispersionen zugesetzt werden.

Die Ölkomponente der Emulsion besteht aus einer Mischung aus trocknenden und nicht-trocknenden Ölen. Unter trocknenden Ölen versteht man fette, vor allem aus Triglyceriden ein- oder mehrfach ungesättigter Fettsäuren bestehende Öle, die - in dünner Schicht aufgetragen - durch Oxidations- und Vernetzungsreaktionen zu harten, bis elastischen Filmen erstarren. Nicht-trocknende Öle zeigen dieses Verhalten nicht. Als besonders vorteilhaft hat sich die Mischung "Penetrol" herausgestellt:

Die erfindungsgemäße verwendbare Emulsion zeichnet sich durch im Vergleich zu den bekannten Substanzen überraschend hohe Eindringtiefen in die zu behandelnden Steine sowie ein wesentlich besseres Haftverhalten aus. Die mit dieser Mischung behandelten Steine zeigen in der Praxis überraschenderweise nicht die oben beschriebene nachteilige Wirkung der falschen Konservierungsmaßnahmen verstärkt auftretenden Verwitterungserscheinungen. Die Überraschung ist um so größer als die erfindungsgemäße Emulsion auch Öle enthält, die, wie oben ausgeführt, von der Fachwelt als Fehlbehandlung eingeschätzt wird (vgl. Rolf Wihr "Restaurierung von Steindenkmälern", erschienen im Callwag Verlag München).

Durch die erfindungsgemäße Verwendung der hier vorgeschlagenen Emulsion wird es möglich, neue Steinsubstanz sowie Steine zu festigen, die sich in einem fortgeschrittenen Verwitterungsstadium befinden, deren Substanz also bereits stark rieselt bzw. absandet, sowie Steine, die bislang als nicht behandelbar galten.

Das Mischungsverhältnis von Acrylat-Dispersion zu Ölmischung ist abhängig von dem Schadensbild des zu behandelnden Gesteins. Je stärker das Gestein absandet bzw. rieselt, um so größer muß der Ölanteil gewählt werden.

Ein weiterer Vorteil der Erfindung besteht darin, daß die einsetzbare Mischung keine umweltschädlichen Lösungsmittel, wie aromatisierte oder chlorierte Kohlenwasserstoffe, enthalten muß.

### Im folgenden wird ein Ausführungsbeispiel der Erfindung dargestellt:

### Wasserkomponente der Emulsion:

| | |
|---|---|
| Handelsname: | Setta Aqua-Siegel matt, seidenmatt oder glänzend |
| Hersteller: | Adler Werk Lackfabrik |
| | Bergwerkstraße 22 |
| | A-6130 Österreich |

### Chemische Charakterisierung und Angabe der sicherheitstechnisch wichtigen Bestandteile:

Form: flüssig
Farbe: farblos
Geruch: arttypisch

### Physikalische und sicherheitstechnische Angaben:

| | | |
|---|---|---|
| Zustandsänderung Siedebeginn: | | 100°C |
| Dichte: | 20°C | 1,02 g/cm³ |
| Dampfdruck: | 20°C | 23 mbar |
| Viskosität: | 20°C | 13 sec (4 mm) Din 53211 |

Zündtemperatur: 215°C
Explosionsgrenzen: untere 1,6%, obere 16,1%

| ÖNORM M 9485: Lösungsmittelanteil: | | |
|---|---|---|
| | Wasser | 34,5% |
| | Klasse 2 | 5,5% |
| | Klasse 3 | 3,2% |
| Nicht klassifiziert | | 29,4% |
| | | 72,6% |

| TA-Luft: | | Lösungsmittelanteil: |
|---|---|---|
| | Wasser | 34,5% |
| | Klasse I | 0,2% |
| | Klasse II | 5,5% |
| | Klasse III | 3,6% |
| Nicht klassifiziert | | 28,8% |
| | | 76,6% |
| Festkörperanteil | | 27,4% |

### Zur Herstellung der verwendbaren Emulsion dient eine Ölsubstanz. PENETROL (Handelsname), vorzugsweise PENETROL-EB

64742-47-8 30 - 50 w-% XN R 65

Destillate (ERDÖL), mit Wasserstoff behandelt

### leichte

8052-41-3 < 10 w-% XN R 65

Stoddard Lösungsmittel
Form: flüssig
Farbe: bräunlich
Geruch: schwach, charakteristisch

### Physikalische und sicherheitstechnische Angaben:

Dichte bei 20°C 0,87 g/cm³
Siedetemperatur 150 - 350°C
Flammpunkt größer als 63°C
Viskosität: kleiner 7 x 10-6 m² / sec

Die beiden Komponenten werden miteinander vermischt.

Als besonders vorteilhaft hat sich ein Volumenverhältnis Acrylat-Dispersion zu Ölmischung von 10 : 3 herausgestellt. Zur Verdünnung und Einstellung der gewünschten Viskosität der Emulsion kann zusätzlich Wasser zugefügt werden. Beispielhaft sei folgendes Mischungsverhältnis genannt: Acrylat-Dispersion zu Wasser zu Ölmischung im Volumenverhältnis 10 : 10 : 3.

Nach dem Vermischen der genannten Komponenten ist die Emulsion gebrauchsfertig. Sie kann etwa 24 bis 48 Stunden verwendet werden (sogenannte Tropfzeit). Das Stoffgemisch kann mit allen handelsüblichen Werkzeugen, wie Pinsel, Rolle, Schwamm sowie spritztechnisch auf die Steinoberfläche aufgebracht werden. Der Verbrauch ist abhängig von der Saugfähigkeit der Steinsubstanz.

## Patentansprüche

1. Verwendung eines Gemischs zur Festigung von Gesteinsmaterial bestehend aus
- einer Acrylat-Dispersion und
- trocknenden und nicht-trocknenden Ölen

2. Verwendung nach Anspruch 1, **gekennzeichnet durch** eine Acrylat-Dispersion/Ölmischung im Volumenverhältnis von 10 : 3.

3. Verwendung nach Anspruch 1 oder 2, **gekennzeichnet durch** Wasser als Lösungs- oder Dispergiermittel.

4. Verwendung nach einem der Ansprüche 1 bis 3, **gekennzeichnet durch** eine Acrylat-Dispersion/Wasser/Ölmischung im Volumenverhältnis von 10 : 10 : 3.

5. Verwendung nach einem der Ansprüche 1 bis 4, **dadurch gekennzeichnet, daß** das Gemisch als Emulsion vorliegt.

6. Verwendung nach einem der Ansprüche 1 bis 5, **dadurch gekennzeichnet, daß** der Ölanteil abhängig vom Grad der Porosität oder der Beschädigung des zu behandelnden Gesteins verändert wird.

## Claims

1. Use of a compound to strengthen stone material consisting of
- an acrylate dispersion and
- drying and non-drying oils

2. Use according to Claim 1, **characterised by** an acrylate dispersion/oil mixture in the volume ratio of 10:3.

3. Use according to Claim 1 or 2, **characterised by** water as the solvent or dispersing agent.

4. Use according to any one of Claims 1 to 3, **characterised by** an acrylate dispersion/water/oil mixture in the volume ratio of 10:10:3.

5. Use according to any one of Claims 1 to 4, **characterised in that** the compound is available as an emulsion.

6. Use according to any one of Claims 1 to 5, **characterised in that** the oil part is modified depending on the degree of porosity of or damage to the stone to be treated.

## Revendications

1. Utilisation d'un mélange pour la consolidation d'un matériau de roche, composé
- d'une dispersion d'acrylate, et
- d'huiles siccatives et non siccatives.

2. Utilisation selon la revendication 1, **caractérisée par** une dispersion d'acrylate/un mélange d'huiles selon un rapport de volume de 10:3.

3. Utilisation selon la revendication 1 ou 2, **caractérisée par** de l'eau en tant que solvant ou dispersant.

4. Utilisation selon l'une des revendications 1 à 3, **caractérisée par** une dispersion d'acrylate/de l'eau/un mélange d'huiles selon un rapport de volume de 10:10:3.

5. Utilisation selon l'une des revendications 1 à 4, **caractérisée en ce que** le mélange se présente sous la forme d'une émulsion.

6. Utilisation selon l'une des revendications 1 à 5, **caractérisée en ce que** la fraction d'huile est modifiée en fonction du degré de porosité ou de l'endommagement de la roche à traiter.
